# EUROPÄISCHE PATENTSCHRIFT

(11) **EP 0 542 010 B1**
(45) Veröffentlichungstag und Bekanntmachung des Hinweises auf die Patenterteilung: **23.08.1995**
(21) Anmeldenummer: 92118155.8
(22) Anmeldetag: 23.10.1992
(51) Int. Cl.: H02G 15/18

(54) **Kabelmuffe zum Verbinden und Abzweigen von Kabeln, insbesondere Fernmeldekabeln**
Cable sleeve for junction and tapping of cables, particularly of telecommunication cables
Manchon de câbles pour la jonction et la dérivation de câbles, en particulier de câbles de télécommunication

(30) Priorität: 12.11.1991 DE 4137206
(43) Veröffentlichungstag der Anmeldung: 19.05.1993
(73) Patentinhaber: Stewing Kunststoffbetrieb GmbH Dorsten, 46282 Dorsten (DE)
(72) Erfinder: Dehling, Helmut, Dipl.-Ing., W-4270 Dorsten 11 (DE)
(74) Vertreter: Honke, Manfred, Dr.-Ing.

(56) Entgegenhaltungen:
- DE-A- 3 643 370
- DE-U- 9 107 912

## Beschreibung

Die Erfindung betrifft eine Kabelmuffe zum Verbinden und Abzweigen von Kabeln, insbes. Fernmeldekabeln, mit einem längsgeteilten Muffenrohr und die Längsteilung begrenzenden Verschlußprofilen und mit zum stirnseitigen Abschluß des Muffenrohres von dem Muffenrohr ummantelten Dichtkörpern mit Kabeldurchführungen, wobei die Verschlußprofile in geschlossenem Zustand des Muffenrohres formschlüssig gegeneinander anliegende Stoßflächen aufweisen. - Bei einer derartigen Kabelmuffe sind zwischen den Dichtkörpern und dem die Dichtkörper ummantelnden Muffenrohr Umfangsdichtungen angeordnet, während im Bereich der Verschlußprofile eine Längsdichtung vorgesehen ist, welche die Umfangsdichtungen kreuzt (siehe DE-U- 9 107 912).

Es ist eine Kabelmuffe mit einem längsgeteilten Muffenrohr der eingangs beschriebenen Ausführungsform bekannt (siehe DE-A- 3 643 370), bei welcher das geöffnete bzw. gespreizte Muffenrohr von seinem der Öffnung gegenüberliegenden Scheitelpunkt ausgehend eine von der Kreisform abweichende und kontinuierlich zunehmende nach einwärts gerichtete Zusatzkrümmung aufweist. Diese zunehmende Zusatzkrümmung soll so gewählt sein, daß im geschlossenen Zustand des Muffenrohres - also bei ummantelten Dichtkörpern - entlang der umlaufenden Dichtungsbereiche gleichmäßige Dichtungsverhältnisse, insbes. ein annähernd gleicher Dichtungsdruck, gegeben sein soll. Außerdem soll bei geschlossenem Muffenrohr und flächenschlüssig gegeneinander anliegenden Stoßflächen der Verschlußprofile ein gleichmäßiger Flächendruck erreicht werden. Diese bekannte Ausführungsform ist nicht frei von Nachteilen. Denn aus der nach einwärts gerichteten Zusatzkrümmung resultiert ein Verkanten der unteren Längskanten der Verschlußprofile gegen die Umfangsdichtungen auf den Dichtkörpern, wenn das Muffenrohr auf die Dichtkörper aufgezogen und die Verschlußprofile bis zur flächenschlüssigen Anlage ihrer Stoßflächen zusammengedrückt werden, um eine die zusammengedrückten Verschlußprofile übergreifende Verschlußschiene aufschieben zu können. Diese Verkantung der unteren Längskanten gegen die Umfangsdichtungen führt zunächst zu einem bereichsweisen Aufwerfen und schließlich Verquetschen der Umfangsdichtungen, so daß die Dichtungsverhältnisse gestört werden und sich insbes. entlang der umlaufenden Dichtungsbereiche kaum ein annähernd gleicher Dichtungsdruck erreichen läßt. Aufgrund der Verkantungen ist auch ein gleichmäßiger Flächendruck zwischen den Stoßflächen der Verschlußprofile in Frage gestellt. - Hier setzt die Erfindung ein.

Der Erfindung liegt die Aufgabe zugrunde, eine Kabelmuffe der eingangs beschriebenen Ausführungsform zu schaffen, bei welcher in einfacher und funktionsgerechter Weise eine in Längs- und Umfangsrichtung einwandfreie Dichtung gewährleistet ist.

Diese Aufgabe löst die Erfindung bei einer gattungsgemäßen Kabelmuffe dadurch, daß das sich in geöffnetem bzw. aufgespreiztem Zustand befindende Muffenrohr im Bereich seiner beiden Längskanten über eine vorgegebene Bogenlänge eine sich bis zu den Stoßflächen seiner Verschlußprofile erstreckende Aufbiegung aufweist. - Nach Lehre der Erfindung weist also das geöffnete bzw. gespreizte Muffenrohr eine von seiner Umfangskrümmung abweichende nach außen gerichtete Gegenkrümmung auf. Eine solche Gegenkrümmung bzw. Aufbiegung verhindert im Zuge der Montage des Muffenrohres ein Verkanten der unteren Längsränder der Verschlußprofile gegen die Umfangsdichtungen auf den Dichtkörpern. Folglich wird ein Aufwerfen und schließlich Verquetschen der Umfangsdichtungen vermieden, werden vielmehr einwandfreie Dichtungsverhältnisse unter Berücksichtigung eines über den Umfang gleichmäßigen Dichtungsdruckes erreicht. Gleichmäßiger Flächendruck und folglich Dichtungsdruck wird aber auch hinsichtlich der Stoßflächen der Verschlußprofile und folglich der Längsdichtung erreicht, weil die Stoßflächen sich erst in der Endphase des Schließens des Muffenrohres und folglich Zusammenführens der Verschlußprofile formschlüssig gegeneinander anlegen bzw. ineinandergreifen. Einwandfreie Dichtungsverhältnisse in Längs- und Umfangsrichtung werden insbesondere auch dann erreicht, wenn die Stoßflächen der Verschlußprofile als Nut/Federverbindung aus einem U-förmigen Nutprofil zur Aufnahme der Längsdichtung und einem in das Nutprofil eingreifenden Federprofil zum Verpressen der Längsdichtung ausgebildet sind und das U-förmige Nutprofil einen sich in Umfangsrichtung des Muffenrohres erstreckenden Innenschenkel mit der unteren Längskante aufweist. Darüber hinaus läßt sich das Muffenrohr bei der erfindungsgemäßen Kabelmuffe mit verhältnismäßig geringem Kraftaufwand einwandfrei schließen, um einen Spannverschluß auf die gegeneinander anliegenden Verschlußprofile aufschieben zu können. Das gilt selbst dann, wenn das Muffenrohr im Bereich seiner beiden Stirnseiten bis zu der Längsteilung bzw. den Längsteilungskanten umlaufende Mantelverstärkungen vorgegebener Breite und Dicke aufweist. Denn bei dieser Ausführungsform empfiehlt die Erfindung, daß die Mantelverstärkungen in Rohrlängsrichtung verlaufende Querrillen aufweisen, die sich im Anfangsbereich der Aufbiegungen befinden. Die Querrillen reduzieren vorzugsweise die Mantelverstärkungen auf die Manteldicke, so daß im Bereich der Mantelverstärkungen beim Schließen des Muffenrohres in festigkeitsmäßiger Hinsicht bzw. hinsichtlich der Biegefestigkeit die gleichen Verhältnisse wie im übrigen Mantelbereich zwischen den Mantelverstärkungen vorliegen. Die Mantelverstärkungen selbst haben die Aufgabe, zur Erzielung einer einwandfreien Abdichtung des Muffenrohres gegen die Dichtkörper eine Überdehnung und schließlich Aufweitung des Muffenrohres im Zuge des Verschließens zu verhindern, und zwar insbes. unter Berücksichtigung der zwischengeschalteten Umfangsdichtungen, die sich mit der Längsdichtung kreuzen. Weiter sieht die Erfindung vor, daß sich die Bogenlänge der Aufbiegungen über einen Zentriwinkel bis zu 45°, vorzugsweise 30° erstreckt, während der Aufbiegungswinkel bis zu 5°, vorzugsweise 3° beträgt. Aufbiegungswinkel meint den zwischen der jeweiligen Aufbiegung und der übrigen Umfangskrümmung des geöffneten bzw. aufgespreizten Muffenrohres gebildeten Winkel.

Im folgenden wird die Erfindung anhand einer lediglich ein Ausführungsbeispiel darstellenden Zeichnung näher erläutert; es zeigen:

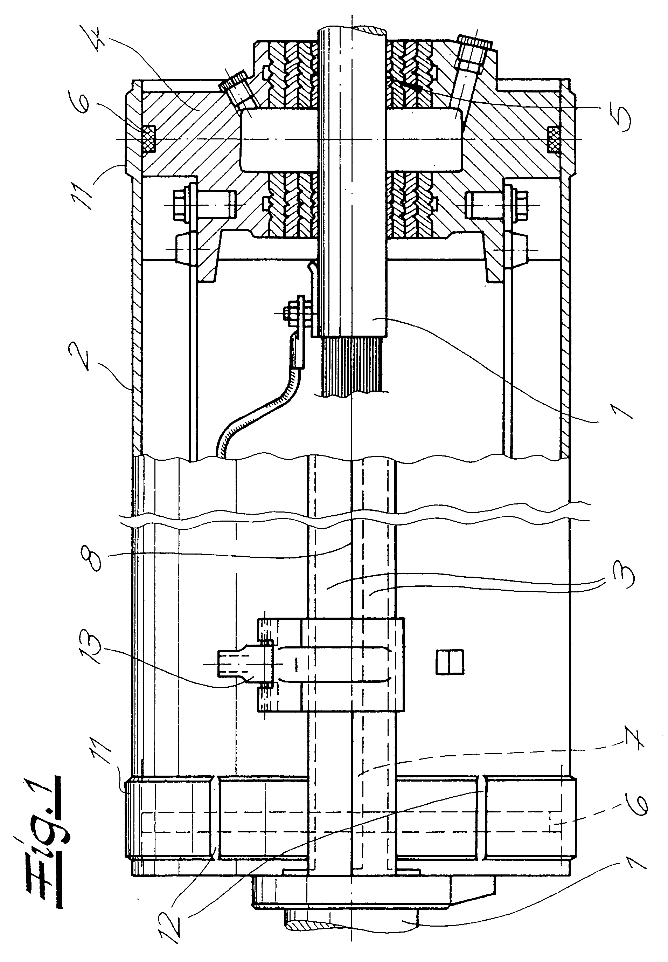

- Fig. 1: eine erfindungsgemäße Kabelmuffe teilweise im Axialschnitt,

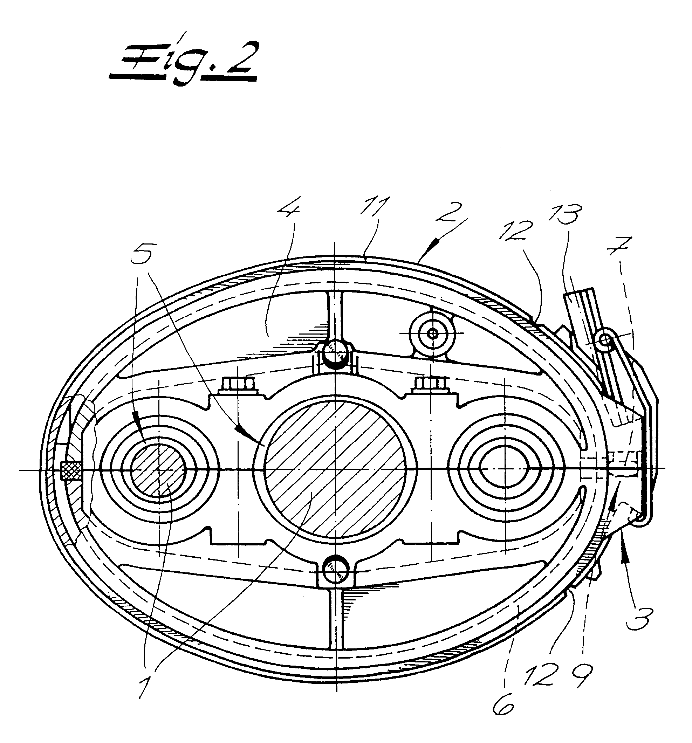

- Fig. 2: eine schematische Stirnansicht auf den Gegenstand nach Fig. 1,

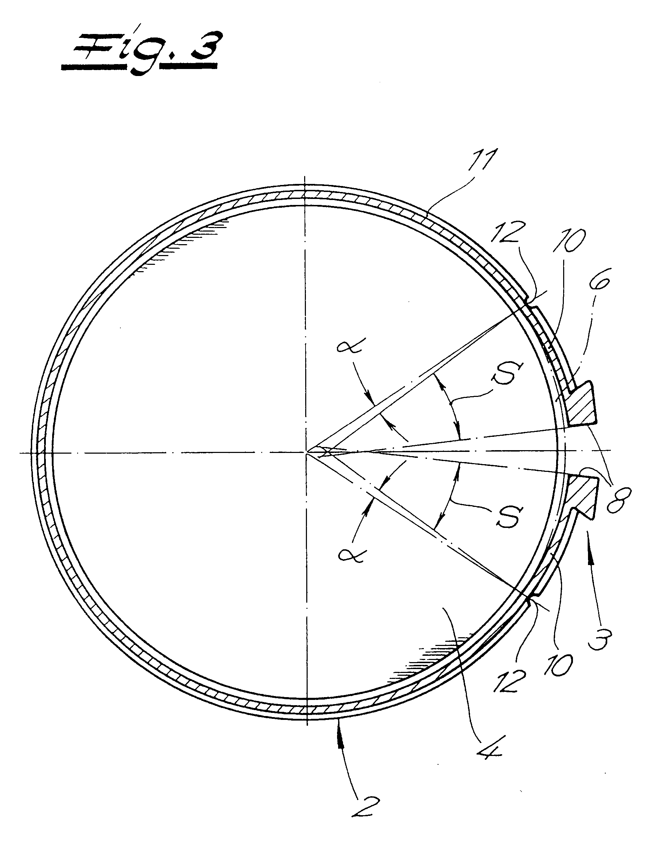

- Fig. 3: in schematischer Darstellung ein Muffenrohr im Axialschnitt und geöffnetem Zustand mit angedeutetem Dichtkörper,

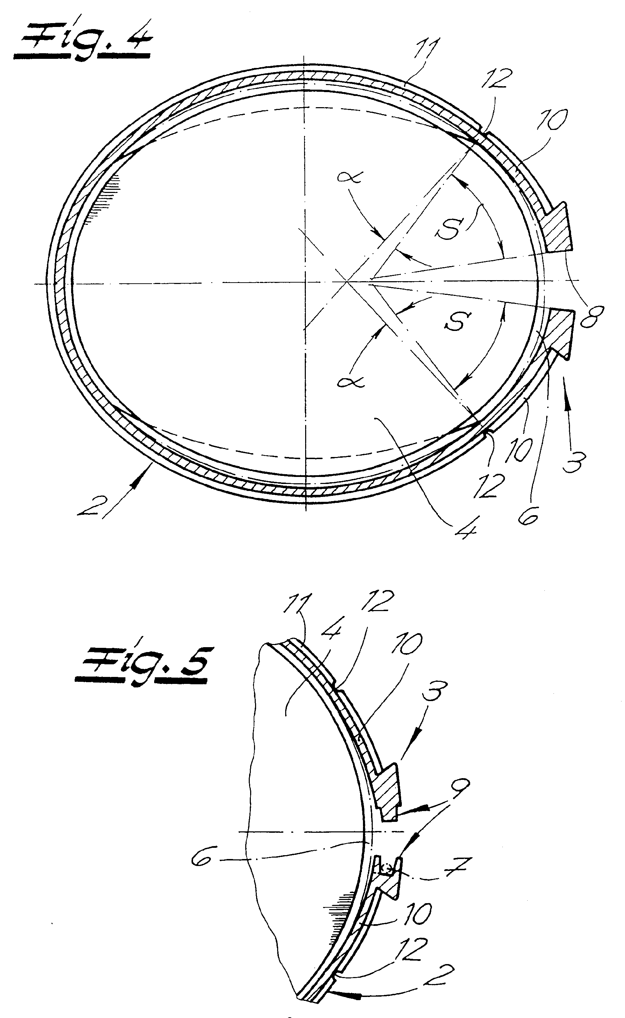

- Fig. 4: eine abgewandelte Ausführungsform des Gegenstandes nach Fig. 3 und
- Fig. 5: eine weitere abgewandelte Ausführungsform des Gegenstandes nach Fig. 3 mit Nut/Federverbindung für die Verschlußprofile.

In den Figuren ist eine Kabelmuffe zum Verbinden und Abzweigen von Kabeln, insbes. Fernmeldekabeln 1 dargestellt, die in ihrem grundsätzlichen Aufbau ein längsgeteiltes Muffenrohr 2 aus thermoplastischem Kunststoff mit die Längsteilung begrenzenden Verschlußprofilen 3 und Dichtkörpern 4 mit Kabeldurchführungen 5 zum stirnseitigen Abschluß des Muffenrohres 2 aufweist, welche von dem in geschlossenem Zustand befindlichen Muffenrohr 2 ummantelt werden. Zwischen dem Muffenrohr 2 und den Dichtkörpern 4 sind Umfangsdichtungen 6 vorgesehen. Zum Abdichten der Längsteilung des Muffenrohres 2 ist eine Längsdichtung 7 vorgesehen, welche die Umfangsdichtungen 6 kreuzt. Die Verschlußprofile 3 weisen in geschlossenem Zustand des Muffenrohres 2 formschlüssig gegeneinander anliegende Stoßflächen 8 auf, gegebenenfalls unter Verwirklichung einer Nut/Federverbindung 9 mit eingelegter Längsdichtung 7. Das sich in geöffnetem Zustand befindende Muffenrohr 2 weist im Bereich seiner beiden Längskanten über eine vorgegebene Bogenlänge S jeweils eine sich bis zu den Stoßflächen 8 seiner Verschlußprofile 3 erstreckenden Aufbiegung 10 auf. Die Bogenlänge S der Aufbiegungen 10 erstreckt sich über einen Zentriwinkel bis zu 45°, vorzugsweise 30°. Der Aufbiegungswinkel α , den die Aufbiegungen 10 mit der übrigen Umfangskrümmung des Muffenrohres 2 in geöffnetem Zustand bilden, beträgt bis zu 5°, vorzugsweise 3°. Das Muffenrohr 2 weist im Bereich seiner beiden Stirnseiten bis zu der Längsteilung bzw. den Teilungskanten umlaufende Mantelverstärkungen 11 vorgegebener Breite und Dicke auf. Diese Mantelverstärkungen 11 besitzen in Rohrlängsrichtung verlaufende Querrillen 12, die sich im Anfangsbereich der Aufbiegungen 10 befinden, um im Bereich der Mantelverstärkungen 11 die Biegefestigkeit des Muffenrohres 2 auf die Biegefestigkeit der unverstärkten Rohrwandung zu reduzieren. Dazu reduzieren die Querrillen 12 die Mantelverstärkungen 11 auf die Mantel- bzw. Rohrdicke, sind also so tief, wie die Mantelverstärkungen 11 dick sind, so daß lediglich noch die Rohr- bzw. Manteldicke erhalten bleibt. Auf diese Weise lassen sich die Aufbiegungen 10 und mit den Aufbiegungen 10 die Verschlußprofile 3 trotz der Mantelverstärkungen 11 mit einer verhältnismäßig geringen Schließkraft zusammenführen, um dann mittels eines Verschlußspanners 13 verschlossen zu werden.

## Patentansprüche

1. Kabelmuffe zum Verbinden und Abzweigen von Kabeln, insbes. Fernmeldekabeln (1), mit einem längsgeteilten Muffenrohr (2) und die Längsteilung begrenzenden Verschlußprofilen (3) und mit zum stirnseitigen Abschluß des Muffenrohres (2) ummantelten Dichtkörpern (4) mit Kabeldurchführungen (5), wobei die Verschlußprofile (3) in geschlossenem Zustand des Muffenrohres (2) formschlüssig gegeneinander anliegende Stoßflächen (8) aufweisen, **dadurch gekennzeichnet**, daß das sich in geöffnetem Zustand befindende Muffenrohr (2) im Bereich seiner beiden Längskanten über eine vorgegebene Bogenlänge (S) eine sich bis zu den Stoßflächen (8) seiner Verschlußprofile (3) erstreckende Aufbiegung (10) aufweist.

2. Kabelmuffe nach Anspruch 1, dadurch gekennzeichnet, daß sich die Bogenlänge (S) der Aufbiegungen (10) über einen Zentriwinkel bis zu 45°, vorzugsweise 30° erstreckt.

3. Kabelmuffe nach Anspruch 1 oder 2, dadurch gekennzeichnet, daß der Aufbiegungswinkel α bis zu 5°, vorzugsweise 3° beträgt.

4. Kabelmuffe nach einem der Ansprüche 1 bis 3, mit im Bereich der beiden Stirnseiten des Muffenrohres bis zu der Längsteilung umlaufenden Mantelverstärkungen, dadurch gekennzeichnet, daß die Mantelverstärkungen (11) in Rohrlängsrichtung verlaufende Querrillen (12) aufweisen, die sich im Anfangsbereich der Aufbiegungen (10) befinden.

5. Kabelmuffe nach einem der Ansprüche 1 bis 4, dadurch gekennzeichnet, daß die Querrillen (12) die Mantelverstärkungen (11) auf die Rohrdicke reduzieren.

## Claims

1. A cable sleeve for connecting and branching cables (1), particularly communications cables, with a longitudinally divided socket pipe (2) and closure profiles (3) delimiting the longitudinal division and with sealing bodies (4), sheathed for closing the socket pipe (2) on the end, with cable bushings (5), wherein the closure profiles (3) have striking faces (8) bearing against each other with a form-fit in the closed state of the socket pipe (2), characterised in that the socket pipe (2), when in the open state has in the region of its two longitudinal edges over a predetermined arc length (S) an upward bend (10) extending as far as the striking faces (8) of its closure profiles (3).

2. A cable sleeve according to claim 1, characterised in that the arc length (S) of the upward bend (10) extends over a central angle up to 45°, preferably 30°.

3. A cable sleeve according to claim 1 or 2, characterised in that the upward bending angle α amounts to up to 5°, preferably 3°.

4. A cable sleeve according to one of claims 1 to 3, with sheath reinforcements in the region of the two ends of the cable sleeve running around as far as the longitudinal division, characterised in that the sheath reinforcements (11) have crosswise grooves (12) running in the longitudinal direction of the pipe, which grooves are located in the region of the beginning of the upward bends (10).

5. A cable sleeve according to one of claims 1 to 4, characterised in that the crosswise grooves (12) reduce the sheath reinforcements (11) to the thickness of the pipe.

## Revendications

1. Manchon de câble pour le raccordement et la dérivation de câbles, en particulier de câbles de télécommunication (1), comportant un tube (2) de manchon partagé dans le sens de la longueur et des profilés de fermeture (3) délimitant cette division longitudinale et comportant des corps d'étanchéité (4), gainés vers la fermeture frontale du tube (2) de manchon, avec des passages de câble (5), les profilés de fermeture (3) à l'état fermé du tube (2) de manchon présentant des surfaces jointives (8) de formes complémentaires s'appliquant l'une contre l'autre, caractérisé en ce que le tube (2) de manchon à l'état ouvert, présente, dans la zone de ses deux bords longitudinaux sur une longueur d'arc (S) donnée, une courbure (10) s'étendant jusqu'aux surfaces jointives (8) de ses profilés de fermeture (3).

2. Manchon de câble selon la revendication 1, caractérisé en ce que la longueur d'arc (S) des courbures (10) s'étend sur un angle de centrage allant jusqu'à 45°, de préférence égal à 30°.

3. Manchon de câble selon la revendication 1 ou 2, caractérisé en ce que l'angle de courbure α peut aller jusqu'à 5°, de préférence être égal à 3°.

4. Manchon de câble selon l'une des revendications 1 à 3, avec des renforts de gaine s'étendant dans la zone des deux côtés frontaux du tube de manchon jusqu'à la division longitudinale, caractérisé en ce que les renforts de gaine (11) présentent des gorges transversales (12), s'étendant dans la direction longitudinale du tube, qui se trouvent dans la zone initiale des courbures (10).

5. Manchon de câble selon l'une des revendications 1 à 4, caractérisé en ce que les gorges transversales (12) réduisent les renforts de gaine (11) à l'épaisseur du tube.
